# EUROPEAN PATENT SPECIFICATION

(11) **EP 2 197 934 B1**
(45) Date of publication and mention of the grant of the patent: **24.06.2015**
(21) Application number: 08837930.0
(22) Date of filing: 03.10.2008
(51) Int. Cl.: C08G 18/10, C08G 18/40, C08J 9/04, C07C 17/08, C08G 18/18, C08J 9/14

(54) **NON-SILICONE SURFACTANTS FOR POLYURETHANE OR POLYISOCYANURATE FOAM CONTAINING HALOGENATED OLEFINS AS BLOWING AGENTS**
NICHTSILIKON-TENSIDE FÜR POLYURETHAN- ODER POLYISOCYANURAT-SCHAUMSTOFF MIT HALOGENIERTEN OLEFINEN ALS TREIBMITTELN
AGENTS TENSIOACTIFS NON SILICONE POUR MOUSSE DE POLYURÉTHANE OU DE POLYISOCYANATE CONTENANT DES OLÉFINES HALOGÉNÉES COMME AGENTS GONFLANTS

(30) Priority: 12.10.2007 US 979477 P; 30.09.2008 US 241638
(43) Date of publication of application: 23.06.2010
(73) Proprietor: Honeywell International Inc., Morristown, NJ 07962-2245 (US)
(72) Inventor: WILLIAMS, David J, East Amherst New York 14051 (US); VANDERPUY, Michael, Amherst New York 14221 (US)
(74) Representative: Hucker, Charlotte Jane
(86) International application number: PCT/US2008/078698
(87) International publication number: WO 2009/048802

(56) References cited:
- EP-A1- 1 233 035
- WO-A1-97/14730
- WO-A2-2007/002703
- JP-A- 2001 026 625
- US-A- 4 530 938
- US-A- 5 208 269
- US-A1- 2007 100 009

## Description

### CROSS REFERENCE TO RELATED APPLICATION

This application claims the benefit of co-pending Provisional patent application serial number 60/979,477 filed October 12, 2007.

### BACKGROUND OF THE INVENTION

### Field of the Invention

The present invention pertains to polyurethane and polyisocyanurate foams and methods for the preparation thereof. More particularly, the invention relates to rigid polyurethane and polyisocyanurate foams and methods for their preparation, which foams are characterized by a fine uniform cell structure and little or no foam collapse. The foams are produced with an organic polyisocyanate and a polyol premix composition which comprises a combination of a blowing agent, which is preferably a hydrohaloolefin, a polyol, a surfactant component which comprises a non-silicone surfactant and is substantially absent of a silicone surfactant, and a tertiary amine catalyst.

### Description of the Related Art

The class of foams known as low density, rigid polyurethane or polyisocyanurate foams has utility in a wide variety of insulation applications including roofing systems, building panels, building envelope insulation, refrigerators and freezers. A critical factor in the large-scale commercial acceptance of rigid polyurethane foams has been their ability to provide a good balance of properties. Rigid polyurethane and polyisocyanurate foams are known to provide outstanding thermal insulation, excellent fire resistance properties, and superior structural properties at reasonably low densities. The foam industry has historically used liquid fluorocarbon blowing agents because of their ease of use in processing conditions. Fluorocarbons not only act as blowing agents by virtue of their volatility, but also are encapsulated or entrained in the closed cell structure of the rigid foam and are the major contributor to the low thermal conductivity properties of the rigid urethane foams. The use of a fluorocarbon as the preferred commercial expansion or blowing agent in insulating foam applications is based in part on the resulting k-factor associated with the foam produced. The k-factor is defined as the rate of transfer of heat energy by conduction through one square foot of one-inch thick homogenous material in one hour where there is a difference of one degree Fahrenheit perpendicularly across the two surfaces of the material. Since the utility of closed-cell polyurethane-type foams is based, in part, on their thermal insulation properties, it would be advantageous to identify materials that produce lower k-factor foams.

It is known in the art to produce rigid polyurethane and polyisocyanurate foams by reacting a polyisocyanate with a polyol in the presence of a blowing agent, a catalyst, a surfactant and optionally other ingredients. Blowing agents include hydrocarbons, fluorocarbons, chlorocarbons, fluorochlorocarbons, halogenated hydrocarbons, ethers, esters, aldehydes, ketones, or CO₂ generating materials. For instance, US-A-2007/0100009 discloses a large number of fluorocarbons, hydrofluorocarbons and bromine-containing versions of such compounds which may be used as blowing agents for use in the preparation of foams. Heat generated when the polyisocyanate reacts with the polyol, and volatilizes the blowing agent contained in the liquid mixture, thereby forming bubbles therein. As the polymerization reaction proceeds, the liquid mixture becomes a cellular solid, entrapping the blowing agent in the foam's cells. If a surfactant is not used in the foaming composition, the bubbles simply pass through the liquid mixture without forming a foam or forming a foam with large, irregular cells rendering it not useful. Preferred blowing agents have low global warming potential. Among these are hydrohaloolefins including hydrohaloolefins (HFOs) of which trans-1,3,3,3-tetrafluoropropene (HFO-1234ze) is of particular interest and hydrochlorofluoroolefins (HFCOs) of which 1-chloro-3,3,3-trifluoropropene (HFCO-1233zd) is of particular interest. Processes for the manufacture of 1,3,3,3-tetrafluoropropene are disclosed in U.S. patents 7,230,146 and 7,189,884. Processes for the manufacture of 1-chloro-3,3,3-trifluoropropene are disclosed in U.S. patents 6,844,475 and 6,403,847.

It is convenient in many applications to provide the components for polyurethane or polyisocyanurate foams in pre-blended formulations. Most typically, the foam formulation is pre-blended into two components. The polyisocyanate and optional isocyanate compatible raw materials comprise the first component, commonly referred to as the "A" component. A polyol or mixture of polyols, surfactant, catalyst, blowing agent, and other isocyanate reactive and non-reactive components comprise the second component, commonly referred to as the "B" component. Accordingly, polyurethane or polyisocyanurate foams are readily prepared by bringing together the A and B side components either by hand mix for small preparations and, preferably, machine mix techniques to form blocks, slabs, laminates, pour-in-place panels and other items, spray applied foams, froths, and the like. Optionally, other ingredients such as fire retardants, colorants, auxiliary blowing agents, and other polyols can be added to the mixing head or reaction site. Most conveniently, however, they are all incorporated into one B component.

A shortcoming of two-component systems, especially those using certain hydrohaloolefins, including HFO-1234ze and HFCO-1233zd is the shelf-life of the B-side composition. Normally when a foam is produced by bringing together the A and B side components, a good foam is obtained. However, if the polyol premix composition is aged, prior to treatment with the polyisocyanate, the foams are of lower quality and may even collapse during the formation of the foam.

It has now been found that the origin of the problem is the reaction of certain amine catalysts with certain hydrohaloolefins including HFO-1234ze and HFCO-1233zd, resulting in partial decomposition of the blowing agent. It has been found that, subsequent to the decomposition of the blowing agent, the molecular weight of the usual silicone surfactants is detrimentally altered, leading to poor foam structure.

While it is possible to solve the problem by separating the blowing agent, surfactant, and catalyst, for example by adding the blowing agent, amine catalyst, or surfactant to the polyisocyanate, ("A" component) or by introducing the blowing agent, amine catalyst, or surfactant using a separate stream from the "A" or "B" component, a preferred solution is one that does not require reformulation or a change in the way the foams are made. It has now been found that a surfactant component which comprises a non-silicone surfactant and is substantially absent of a silicone surfactant, is not detrimentally altered by blowing agents, such as hydrohaloolefins including trans HFO-1234ze and HFCO-1233zd, such that good quality foams can be produced even if the polyol blend has been aged.

### DESCRIPTION OF THE INVENTION

The invention provides a polyol premix composition which comprises a combination of a blowing agent, a polyol, a surfactant component which comprises a non-silicone surfactant and is substantially absent of a silicone surfactant, and a tertiary amine catalyst, wherein the blowing agent comprises a hydrohaloolefin, and optionally a hydrocarbon, fluorocarbon, chlorocarbon, fluorochlorocarbon, halogenated hydrocarbon, CO₂ generating material, or combinations thereof. The hydrohaloolefin comprises at least one fluoroalekene or chloroalkene containing form 3 to 4 carbon atoms and at least one carbon-carbon double bond.

The invention also provides a method of forming polyol premix composition which comprises a combining a blowing agent, a polyol, a surfactant component which comprises a non-silicone surfactant and is substantially absent of a silicone surfactant, and a tertiary catalyst wherein the blowing agent comprises a hydrohaloolefin, and optionally a hydrocarbon, fluorocarbon, chlorocarbon, fluorochlorocarbon, halogenated hydrocarbon, CO₂ generating material, of combinations thereof. The hydrohaloolefin comprises at least one fluoroalekene or chloroalkene containing form 3 to 4 carbon atoms and at least one carbon-carbon double bond.

The invention also provides a foamable composition comprising a mixture of an organic polyisocyanate and the premix composition.

The invention further provides a method of preparing a polyurethane or polyisocyanurate foam comprising reacting an organic polyisocyanate with the polyol premix composition.

The blowing agent component comprises a hydrohaloolefin as defined above, preferably comprising at least one of HFO-1234ze and HFCO-1233zd., and optionally a hydrocarbon, fluorocarbon, chlorocarbon, fluorochlorocarbon, halogenated hydrocarbon, ether, fluorinated ether, ester, aldehyde, ketone, CO₂ generating material, or combinations thereof.

Preferred hydrohaloolefins non-exclusively include trifluoropropenes, tetrafluoropropenes such as (HFO-1234), pentafluoropropenes such as (HFO-1225), chlorotrifluoropropenes such as (HFO-1233), chlorodifluoropropenes, chlorotetrafluoropropenes, and combinations of these. More preferred that the compounds of the present invention are the tetrafluoropropene, pentafluoropropene, and chlorotrifluoropropene compounds in which the unsaturated terminal carbon has not more than one F or Cl substituent. Included are 1,3,3,3-tetrafluoropropene (HFO-1234ze); 2,3,3,3-tetrafluoropropene, 1,1,3,3,3-tetrafluoropropene, 1,2,3,3,3-tetrafluoropropene (HFO-1225ye), 1,1,1-trifluoropropene, 1,1,1,3,3-pentafluoropropene (HFO-1225zc); 1,1,1,3,3,3-hexafluorobut-2-ene, and 1,1,2,3,3-pentafluoropropene (HFO-1225yc); 1,1,1,2,3-pentafluoropropene (HFO-1225yez); 1-chloro-3,3,3-trifluoropropene (HFCO-1233zd); 1,1,1,4,4,4-hexafluorobut-2-ene or combinations thereof, and any and all structural isomers, geometric isomers, or stereoisomers of each of these.

Preferred hydrohaloolefins have a Global Warming Potential (GWP) of not greater than 150, more preferably not greater than 100 and even more preferably not greater than 75. As used herein, "GWP" is measured relative to that of carbon dioxide and over a 100-year time horizon, as defined in "The Scientific Assessment of Ozone Depletion 2002, a report of the World Meteorological Association's Global Ozone Research and Monitoring Project". Preferred hydrohaloolefins also preferably have an Ozone Depletion Potential (ODP) of not greater than 0.05, more preferably not greater than 0.02 and even more preferably about zero. As used herein, "ODP" is as defined in "The Scientific Assessment of Ozone Depletion 2002, a report of the World Meteorological Association's Global Ozone Research and Monitoring Project".

Preferred optional blowing agents non-exclusively include water, formic acid, organic acids that product CO₂ when they react with an isocyanurate; hydrocarbons; ethers, esters, aldehydes, ketones, halogenated ethers, pentafluorobutane, pentafluoropropane; hexafluoropropane, heptafluoropropane, trans-1,2 dichloroethylene; methyl formate; 1-chloro-1,2,2,2-tetrafluoroethane; 1,1-dichloro-1-fluoroethane; 1,1,1,2-tetrafluoroethane; 1,1,2,2-tetrafluoroethane; 1-chloro 1,1-difluoroethane; 1,1,1,3,3-pentafluorobutane; 1,1,1,2,3,3,3-heptafluoropropane; trichlorofluoromethane; dichlorodifluoromethane; 1,1,1,3,3,3-hexafluoropropane; 1,1,1,2,3,3-hexafluoropropane; difluoromethane; difluoroethane; 1,1,1,3,3-pentafluoropropane; 1,1-difluoroethane; isobutane; normal pentane; isopentane; cyclopentane, or combinations thereof. The blowing agent component is usually present in the polyol premix composition in an amount of from about 1 wt.% to about 30 wt.%, preferably from about 3 wt.% to about 25 wt.%, and more preferably from about 5 wt.% to about 25 wt.%, by weight of the polyol premix composition. When both a hydrohaloolefin and an optional blowing agent are present, the hydrohaloolefin component is usually present in the blowing agent component in an amount of from about 5 wt.% to about 90 wt.%, preferably from about 7 wt.% to about 80 wt.%, and more preferably from about 10 wt.% to about 70 wt.%, by weight of the blowing agent component; and the optional blowing agent is usually present in the blowing agent component in an amount of from about 95 wt.% to about 10 wt.%, preferably from about 93 wt.% to about 20 wt.%, and more preferably from about 90 wt.% to about 30 wt.%, by weight of the blowing agent component.

The polyol component, which includes mixtures of polyols, can be any polyol which reacts in a known fashion with an isocyanate in preparing a polyurethane or polyisocyanurate foam. Useful polyols comprise one or more of a sucrose containing polyol; phenol, a phenol formaldehyde containing polyol; a glucose containing polyol; a sorbitol containing polyol; a methylglucoside containing polyol; an aromatic polyester polyol; glycerol; ethylene glycol; diethylene glycol; propylene glycol; graft copolymers of polyether polyols with a vinyl polymer; a copolymer of a polyether polyol with a polyurea; one or more of (a) condensed with one or more of (b):
(a) glycerine, ethylene glycol, diethylene glycol, trimethylolpropane, ethylene diamine, pentaerythritol, soy oil, lecithin, tall oil, palm oil, castor oil;
(b) ethylene oxide, propylene oxide, a mixture of ethylene oxide and propylene oxide, or combinations thereof. The polyol component is usually present in the polyol premix composition in an amount of from about 60 wt.% to about 95 wt.%, preferably from about 65 wt.% to about 95 wt.%, and more preferably from about 70 wt.% to about 90 wt.%, by weight of the polyol premix composition.

The polyol premix composition next contains a surfactant component which comprises a non-silicone surfactant and is substantially absent of a silicone surfactant. In a preferred embodiment, the surfactant component has 0% silicone surfactant. In a preferred embodiment, the surfactant component has 100% non-silicone surfactant. The surfactant component is used to form a foam from the mixture, as well as to control the size of the bubbles of the foam so that a foam of a desired cell structure is obtained. Preferably, a foam with small bubbles or cells therein of uniform size is desired since it has the most desirable physical properties such as compressive strength and thermal conductivity. Also, it is important to have a foam with stable cells which do not collapse prior to forming or during foam rise. Useful non-silicone surfactants include non-ionic non-silicone surfactants, anionic non-silicone surfactants, cationic non-silicone surfactants, ampholytic non-silicone surfactants, semi-polar non-silicone surfactants, zwitterionic non-silicone surfactants, and combinations thereof.

Useful anionic surfactants include organic sulfuric reaction product having in its molecular structure an alkyl group containing from about 8 to about 22 carbon atoms and a sulfonic acid or sulfuric acid ester group, or mixtures thereof. Examples are the alkyl sulfates, especially those obtained by sulfating the higher alcohols having 8 -18 carbon atoms produced from the glycerides of tallow or coconut oil; and alkyl benzene sulfonates, in which the alkyl group contains from about 9 to about 14 carbon atoms, in straight chain or branched chain configuration, linear straight chain alkyl benzene sulfonates in which the average of the alkyl groups is about 13 carbon atoms, C₁₁ -C₁₄ branched chain alkyl benzene sulfonates can also be used. Other anionic surfactant compounds herein include the alkyl glyceryl ether sulfonates, especially those ethers of higher alcohols derived from tallow and coconut oil; coconut oil fatty acid monoglyceride sulfonates and sulfates; and alkyl phenol ethylene oxide ether sulfates containing about 1 to about 10 units of ethylene oxide per molecule and wherein the alkyl groups contain about 8 to about 12 carbon atoms. Other useful anionic surfactants herein include the esters of α-sulfonated fatty acids containing from about 6 to 20 carbon atoms in the ester group; 2-acyloxyalkane-1-sulfonic acids containing from about 2 to 9 carbon atoms in the acyl group and from about 9 to about 23 carbon atoms in the alkane moiety; alkyl ether sulfates containing from about 10 to 20 carbon atoms in the alkyl group and from about 1 to 30 moles of ethylene oxide; olefin sulfonates containing from about 12 to 24 carbon atoms; and .beta.-alkyloxy alkane sulfonates containing from about 1 to 3 carbon atoms in the alkyl group and from about 8 to 20 carbon atoms in the alkane moiety. Anionic surfactants based on the higher fatty acids containing from about 8 to about 24 carbon atoms and preferably from about 10 to about 20 carbon atoms and the coconut and tallow soaps can also be used herein. Useful water-soluble anionic organic surfactants herein include linear alkyl benzene sulfonates containing from about 10 to about 18 carbon atoms in the alkyl group; branched alkyl benzene sulfonates containing from about 10 to about 18 carbon atoms in the alkyl group; the tallow range alkyl sulfates; the coconut range alkyl glyceryl sulfonates; alkyl ether (ethoxylated) sulfates wherein the alkyl moiety contains from about 12 to 18 carbon atoms and wherein the average degree of ethoxylation varies between 1 and 12, especially 3 to 9; the sulfated condensation products of tallow alcohol with from about 3 to 12, especially 6 to 9, moles of ethylene oxide; and olefin suflonates containing from about 14 to 16 carbon atoms. Preferred anionics for use herein include the linear C₁₀ -C₁₄ alkyl benzene sulfonates; the branched C₁₀ -C₁₄ alkyl benzene sulfonates; the tallow alkyl sulfates the coconut alkyl glyceryl ether sulfonates; the sulfated condensation products of mixed C₁₀-C₁₈ tallow alcohols with from about 1 to about 14 moles of ethylene oxide; and the mixtures of higher fatty acids containing from 10 to 18 carbon atoms. Any of the foregoing anionic surfactants can be used separately herein or as mixtures. C₁₀ -C₁₄ alkaryl sulfonates can comprise alkyl benzene sulfonates, alkyl toluene sulfonates, alkyl naphthalene sulfonates and alkyl poly-benzenoid sulfonates.

The nonionic surfactants can be prepared by a variety of methods well known in the art. In general terms, such nonionic surfactants are typically prepared by condensing ethylene oxide with an -OH containing hydrocarbyl moiety, e.g., an alcohol or alkyl phenol, under conditions of acidic or basic catalysis. Nonionic surfactants for use herein comprise the typical nonionic surface active agents well known in the detergency arts. Such materials can be succinctly described as the condensation products of an alkylene oxide (hydrophilic in nature), especially ethylene oxide (EO), with an organic hydrophobic compound, which is usually aliphatic or alkyl aromatic in nature. The length of the hydrophilic (i.e., polyoxyalkylene) moiety which is condensed with any particular hydrophobic compound can be readily adjusted to yield a water-soluble compound having the desired degree of balance between hydrophilic and lipophilic elements, i.e., the "HLB". The HLB of the ethoxylated nonionics used herein can be experimentally determined in well-known fashion, or can be calculated in the manner set forth in Decker, EMULSIONS THEORY AND PRACTICE, Reinhold 1965, pp. 233 and 248. For example, the HLB of the nonionic surfactants herein can be simply approximated by the term: HLB = E/5; wherein E is the weight percentage of ethylene oxide content in the molecule. Of course, the HLB will vary, for a given hydrocarbyl content, with the amount of ethylene oxide. Preferred nonionic surfactants for use in the present compositions and processes are characterized by an HLB in the range of from 9 to 20, most preferably 10 to 14.

Non-limiting examples of suitable water-soluble nonionic surfactants include the ethylene oxide condensates of alkyl phenols. These compounds include the condensation products of alkyl phenols having an alkyl group containing from about 6 to 18 carbon atoms in either a straight chain or branched chain configuration, with EO, said EO being present in amounts from about 3 to about 25 moles of EO per mole of alkyl phenol. The alkyl substituent in such compounds can be derived, for example, from polymerized propylene, diisobutylene, octene, or nonene. Examples of compounds of this type include nonyl phenol condensed with about 9.5 moles of EO per mole of nonyl phenol; dodecyl phenol condensed with about 12 moles of EO per mole of phenol; dinonyl phenol condensed with about 15 moles of EO per mole of phenol; and di-isooctylphenol condensed with about 15 moles of EO per mole of phenol. The condensation products of aliphatic alcohols with ethylene oxide are another type of nonionic surfactant used herein. The alkyl chain of the aliphatic alcohol can be either straight or branched, and generally contains from about 8 to about 22, preferably 9 to 16, carbon atoms. The alcohols can be primary, secondary, or tertiary. Examples of such ethoxylated alcohols include the condensation product of about 6 moles of EO with 1 mole of tridecanol; myristyl alcohol condensed with about 10 moles of EO per mole of myristyl alcohol; the condensation product of EO with coconut fatty alcohol wherein the coconut alcohol is primarily a mixture of fatty alcohols with alkyl chains varying from 10 to about 14 carbon atoms in length and wherein the condensate contains about 6 moles of EO per mole of total alcohol; and the condensation product of about 9 moles of EO with the above-described coconut alcohol. Tallow alcohol ethoxylates (EO)₆ to (EO)₁₁ are similarly useful herein. The condensation products of ethylene oxide with a hydrophobic base formed by the condensation of propylene oxide with propylene glycol constitute another type of nonionic surfactant. The hydrophobic portion of these compounds has a molecular weight of from about 1500 to 18000 and, of course, exhibits water insolubility. The addition of poly-EO moieties to this hydrophobic portion tends to increase the water-solubility of the molecule as a whole, and the liquid character of the product is retained up to the point where the EO content is about 50% of the total weight of the condensation product. The condensation products of ethylene oxide with the product resulting from the reaction of propylene oxide and ethylenediamine are another type of nonionic surfactant useful herein. The hydrophobic "base" of these condensation products consists of the reaction product of ethylenediamine and excess propylene oxide, said base having a molecular weight of from about 2500 to about 3000. This base compound is thereafter condensed with EO to the extent that the condensation product contains from about 40 to about 80% by weight of poly-EO and has a molecular weight of from about 5,000 to about 11,000. The nonionic surfactants herein include the EO₁ -EO₂₀ condensates of C₉ to C₁₈ primary and secondary alcohols; the condensates of primary alcohols are most preferred. Non-limiting, specific examples of nonionic surfactants of this type are as follows (the abbreviations used for the nonionic surfactants, e.g., C₁₄ (EO)₆, are standard for such materials and describe the carbon content of the lipophilic portion of the molecule and the ethylene oxide content of the hydrophilic portion): n-C₁₄H₂₉(EO)₅; n-C₁₄H₂₉(EO)₆; n-C₁₄H₂₉(EO)₇ ; n-C₁₄H₂₉(EO)₁₀; n-C₁₅H₃₁(EO)₆; n-C₁₅H₃₁(EO)₇; ₂-C₁₅H₃₁(EO)₇; n-C₁₅H₃₁(EO)₈; 2-C₁₅H₃₁(EO)₈; n-C₁₅H₃₁(EO)₉; 2-C₁₅H₃₁(EO)₉; n-C₁₆H₃₃(EO)₉; and 2-C₁₆H₃₃(EO)₉. Mixtures of the foregoing nonionic surfactants are also useful herein. It will be appreciated that the degree of ethoxylation in the nonionics listed herein can vary somewhat, inasmuch as average fractional degrees of ethoxylation occur.

Particularly useful non-ionic non-silicone surfactants include salts of sulfonic acids, such as alkali metal salts of fatty acids, ammonium salts of fatty acids, such as oleic acid, stearic acid, dodecylbenzenedidulfonic acid, dinaphthylmethanedisulfonic acid, ricinoleic acid, oxyethylated alkylphenols, oxyethylated fatty alcohols, paraffin oils, castor oil esters, ricinoleic acid esters, Turkey red oil, groundnut oil, paraffins and fatty alcohols, and combinations thereof. Useful non-silicone surfactants for use in the preparation of polyurethane or polyisocyanurate foams are available under a number of trade names known to those skilled in this art. Such materials have been found to be applicable over a wide range of formulations allowing uniform cell formation and maximum gas entrapment to achieve very low density foam structures. A preferred non-silicone non-ionic surfactant is LK-443 which is commercially available from Air Products Corporation.

Useful cationic surfactants may be quaternary ammonium halide and analogous phosphonium compounds. Normally the chlorides and bromides are most effective. Representative of some of the quaternary ammonium halides include myristyl trimethylammonium bromide, lauryl trimethylammonium bromide, cetyl trimethylammonium bromide, myristyl trimethylammonium chloride, lauryl trimethylammonium chloride and cetyl trimethylammonium chloride.

The compositions and processes herein can employ other surfactants such as the semi-polar, ampholytic, and zwitterionic surfactants as are known in the art. Semi-polar surfactants useful herein include water-soluble amine oxides containing one alkyl moiety of from about 10 to 28 carbon atoms and two moieties selected from the group consisting of alkyl moieties and hydroxyalkyl moieties containing from 1 to about 3 carbon atoms; water-soluble phosphine oxides containing one alkyl moiety of about 10 to 28 carbon atoms and two moieties selected from the group consisting of alkyl moieties and hydroxyalkyl moieties containing from about 1 to 3 carbon atoms; and water-soluble sulfoxides containing one alkyl moiety of from about 10 to 28 carbon atoms and a moiety selected from the group consisting of alkyl and hydroxyalkyl moieties of from 1 to 3 carbon atoms. Ampholytic surfactants include derivatives of aliphatic or aliphatic derivatives of heterocyclic secondary and tertiary amines in which the aliphatic moiety can be straight chain or branched and wherein one of the aliphatic substituents contains from about 8 to 18 carbon atoms, and at least one aliphatic substituent contains an anionic water-solubilizing group. Zwitterionic surfactants include derivatives of aliphatic quaternary ammonium, phosphonium and sulfonium compounds in which the aliphatic moieties can be straight or branched chain, and wherein one of the aliphatic substituents contains from about 8 to 18 carbon atoms and one contains an anionic water solubilizing group. The a non-silicone is usually present in the polyol premix composition in an mount of from about 0.5 wt.% to about 5.0 wt.%, preferably from about 1.0 wt.% to about 4.0 wt.%, and more preferably from about 1.5 wt.% to about 3.0 wt.%, by weight of the polyol premix composition.

The inventive polyol premix composition next contains a catalyst, which is an amine. In one embodiment, the amine has the formula R₁R₂N-[A-NR₃]ₙR₄ wherein each of R₁, R₂, R₃, and R₄ is independently H, a C₁ to C₈ alkyl group, a C₁ to C₈ alkenyl group, a C₁ to C₈ alcohol group, or a C₁ to C₈ ether group, or R₁ and R₂ together form a C₅ to C₇ cyclic alkyl group, a C₅ to C₇ cyclic alkenyl group, a C₅ to C₇ heterocyclic alkyl group, or a C₅ to C₇ heterocyclic alkenyl group; A is a C₁ to C₅ alkyl group, a C₁ to C₅ alkenyl group, or an ether; n is 0, 1, 2, or 3

Useful amines include a primary amine, secondary amine or tertiary amine. Useful tertiary amine catalysts non-exclusively include dicyclohexylmethylamine; ethyldiisopropylamine; dimethylcyclohexylamine; dimethylisopropylamine; methylisopropylbenzylamine; methylcyclopentylbenzylamine; isopropyl-sec-butyl-trifluoroethylamine; diethyl-(α-phenylethyl)amine, tri-n-propylamine, or combinations thereof. Useful secondary amine catalysts non-exclusively include dicyclohexylamine; t-butylisopropylamine; di-t-butylamine; cyclohexyl-t-butylamine; di-sec-butylamine, dicyclopentylamine; di-(α-trifluoromethylethyl)amine; di-(α-phenylethyl)amine; or combinations thereof. Useful primary amine catalysts non-exclusively include: triphenylmethylamine and 1,1-diethyl-n-propylamine.

Other useful amines include morpholines, imidazoles, ether containing compounds, and the like. These include
dimorpholinodiethylether
N-ethylmorpholine
N-methylmorpholine
bis(dimethylaminoethyl) ether
imidizole
n-methylimidazole
1,2-dimethylimidazole
dimorpholinodimethylether
N,N,N',N',N",N"-pentamethyldiethylenetriamine
N,N,N',N',N",N"-pentaethyldiethylenetriamine
N,N,N',N',N",N"-pentamethyldipropylenetriamine
bis(diethylaminoethyl) ether
bis(dimethylaminopropyl) ether.

Teriary amines are preferred. Useful tertiary amines non-exclusively include dicyclohexylmethylamine; ethyldiisopropylamine; dimethylcyclohexylamine; dimethylisopropylamine; methylisopropylbenzylamine; methylcyclopentylbenzylamine; isopropyl-sec-butyl-trifluoroethylamine; diethyl-(α-phenylethyl)amine, tri-n-propylamine, or combinations thereof.

Preferred amines include: N, N-dimethylcyclohexylamine, dimethlyethanolamine, N, N, N', N', N", N" - pentamethyldiethylenetriamine, 1,4-diaza-bicyclo[2.2.2]octane (DABCO), and triethylamine.

The amine catalyst is usually present in the polyol premix composition in an amount of from about 0.1 wt.% to about 3.5 wt.%, preferably from about 0.2 wt.% to about 3.0 wt.%, and more preferably from about 0.5 wt.% to about 2.5 wt.%, by weight of the polyol premix composition.

The polyol premix composition may optionally further comprise a non-amine catalyst. Suitable non-amine catalysts may comprise an organometallic compound containing bismuth, lead, tin, titanium, antimony, uranium, cadmium, cobalt, thorium, aluminum, mercury, zinc, nickel, cerium, molybdenum, vanadium, copper, manganese, zirconium, sodium, potassium, or combinations thereof. These non-exclusively include bismuth nitrate, lead 2-ethylhexoate, lead benzoate, ferric chloride, antimony trichloride, antimony glycolate, stannous salts of carboxylic acids, acids, dialkyl tin salts of carboxylic acids, dialkyl tin salts of carboxylic acids, potassium acetate, potassium octoate, potassium 2-ethylhexoate, glycine salts, quaternary ammonium carboxylates, alkali metal carboxylic acid salts, and N-(2-hydroxy-5-nonylphenol)methyl-N-methylglycinate, tin (II) 2-ethylhexanoate, dibutyltin dilaurate, or combinations thereof. When the optional non-amine catalyst is used, it is usually present in the polyol premix composition in an amount of from about 0.01 wt.% to about 2.5 wt.%, preferably from about 0.05 wt.% to about 2.25 wt.%, and more preferably from about 0.10 wt.% to about 2.00 wt.%. by weight of the polyol premix composition. While these are usual amounts, the quantity amount of metallic catalyst can vary widely, and the appropriate amount can be easily be determined by those skilled in the art.

The preparation of polyurethane or polyisocyanurate foams using the compositions described herein may follow any of the methods well known in the art can be employed, see Saunders and Frisch, Volumes I and II Polyurethanes Chemistry and technology, 1962, John Wiley and Sons, New York, N.Y. or Gum, Reese, Ulrich, Reaction Polymers, 1992, Oxford University Press, New York, N.Y. or Klempner and Sendijarevic, Polymeric Foams and Foam Technology, 2004, Hanser Gardner Publications, Cincinnati, OH. In general, polyurethane or polyisocyanurate foams are prepared by combining an isocyanate, the polyol premix composition, and other materials such as optional flame retardants, colorants, or other additives. These foams can be rigid, flexible, or semi-rigid, and can have a closed cell structure, an open cell structure or a mixture of open and closed cells.

It is convenient in many applications to provide the components for polyurethane or polyisocyanurate foams in pre-blended formulations. Most typically, the foam formulation is pre-blended into two components. The isocyanate and optionally other isocyanate compatible raw materials comprise the first component, commonly referred to as the "A" component. The polyol mixture composition, including surfactant, catalysts, blowing agents, and optional other ingredients comprise the second component, commonly referred to as the "B" component. In any given application, the "B" component may not contain all the above listed components, for example some formulations omit the flame retardant if flame retardancy is not a required foam property. Accordingly, polyurethane or polyisocyanurate foams are readily prepared by bringing together the A and B side components either by hand mix for small preparations and, preferably, machine mix techniques to form blocks, slabs, laminates, pour-in-place panels and other items, spray applied foams, froths, and the like. Optionally, other ingredients such as fire retardants, colorants, auxiliary blowing agents, water, and even other polyols can be added as a stream to the mix head or reaction site. Most conveniently, however, they are all incorporated into one B component as described above.

A foamable composition suitable for forming a polyurethane or polyisocyanurate foam may be formed by reacting an organic polyisocyanate and the polyol premix composition described above. Any organic polyisocyanate can be employed in polyurethane or polyisocyanurate foam synthesis inclusive of aliphatic and aromatic polyisocyanates. Suitable organic polyisocyanates include aliphatic, cycloaliphatic, araliphatic, aromatic, and heterocyclic isocyanates which are well known in the field of polyurethane chemistry. These are described in, for example, U.S. patents 4,868,224; 3,401,190; 3,454,606; 3,277,138; 3,492,330; 3,001,973; 3,394,164; 3,124.605; and 3,201,372. Preferred as a class are the aromatic polyisocyanates.

Representative organic polyisocyanates correspond to the formula:

R(NCO)z

wherein R is a polyvalent organic radical which is either aliphatic, aralkyl, aromatic or mixtures thereof, and z is an integer which corresponds to the valence of R and is at least two. Representative of the organic polyisocyanates contemplated herein includes, for example, the aromatic diisocyanates such as 2,4-toluene diisocyanate, 2,6-toluene diisocyanate, mixtures of 2,4- and 2,6-toluene diisocyanate, crude toluene diisocyanate, methylene diphenyl diisocyanate, crude methylene diphenyl diisocyanate and the like; the aromatic triisocyanates such as 4,4',4"-triphenylmethane triisocyanate, 2,4,6-toluene triisocyanates; the aromatic tetraisocyanates such as 4,4'-dimethyldiphenylmethane-2,2'5,5-'tetraisocyanate, and the like; arylalkyl polyisocyanates such as xylylene diisocyanate; aliphatic polyisocyanate such as hexamethylene-1,6-diisocyanate, lysine diisocyanate methylester and the like; and mixtures thereof. Other organic polyisocyanates include polymethylene polyphenylisocyanate, hydrogenated methylene diphenylisoeyanate, m-phenylene diisocyanate, naphthylene-1,5-diisocyanate, 1-methoxyphenylene-2,4-diisocyanate, 4,4'-biphenylene diisocyanate, 3,3'-dimethoxy-4,4'-biphenyl diisocyanate, -3,3'-dimethyl-4,4'-biphenyl diisocyanate, and 3,3'-dimethyldiphenylmethane-4,4'-diisocyanate; Typical aliphatic polyisocyanates are alkylene diisocyanates such as trimethylene diisocyanate, tetramethylene diisocyanate, and hexamethylene diisocyanate, isophorene diisocyanate, 4, 4'-methylenebis(cyclohexyl isocyanate), and the like; typical aromatic polyisocyanates include m-, and p-phenylene disocyanate, polymethylene polyphenyl isocyanate, 2,4- and 2,6-toluenediisocyanate, dianisidine diisocyanate, bitoylene isocyanate, naphthylene 1,4-diisocyanate, bis(4-isocyanatophenyl)methene, bis(2-methyl-4-isocyanatophenyl)methane, and the like. Preferred polyisocyanates are the polymethylene polyphenyl isocyanates, Particularly the mixtures containing from about 30 to about 85 percent by weight of methylenebis(phenyl isocyanate) with the remainder of the mixture comprising the polymethylene polyphenyl polyisocyanates of functionality higher than 2. These polyisocyanates are prepared by conventional methods known in the art. In the present invention, the polyisocyanate and the polyol are employed in amounts which will yield an NCO/OH stoichiometric ratio in a range of from about 0.9 to about 5.0. In the present invention, the NCO/OH equivalent ratio is, preferably, about 1.0 or more and about 3.0 or less, with the ideal range being from about 1.1 to about 2.5. Especially suitable organic polyisocyanate include polymethylene polyphenyl isocyanate, methylenebis(phenyl isocyanate), toluene diisocyanates, or combinations thereof.

In the preparation of polyisocyanurate foams, trimerization catalysts are used for the purpose of converting the blends in conjunction with excess A component to polyisocyanurate-polyurethane foams. The trimerization catalysts employed can be any catalyst known to one skilled in the art, including, but not limited to, glycine salts, tertiary amine trimerization catalysts, quaternary ammonium carboxylates, and alkali metal carboxylic acid salts and mixtures of the various types of catalysts. Preferred species within the classes are potassium acetate, potassium octoate, and N-(2-hydroxy-5-nonylphenol)methyl-N-methylglycinate.

Conventional flame retardants can also be incorporated, preferably in amount of not more than about 20 percent by weight of the reactants. Optional flame retardants include tris(2-chloroethyl)phosphate, tris(2-chloropropyl)phosphate, tris(2,3-dibromopropyl)phosphate, tris(1,3-dichloropropyl)phosphate, tri(2-chloroisopropyl)phosphate, tricresyl phosphate, tri(2,2-dichloroisopropyl)phosphate, diethyl N,N-bis(2-hydroxyethyl) aminomethylphosphonate, dimethyl methylphosphonate, tri(2,3-dibromopropyl)phosphate, tri(1,3-dichloropropyl)phosphate, and tetra-kis-(2-chloroethyl)ethylene diphosphate, triethylphosphate, diammonium phosphate, various halogenated aromatic compounds, antimony oxide, aluminum trihydrate, polyvinyl chloride, melamine, and the like. Other optional ingredients can include from 0 to about 7 percent water, which chemically reacts with the isocyanate to produce carbon dioxide. This carbon dioxide acts as an auxiliary blowing agent. Formic acid is also used to produce carbon dioxide by reacting with the isocyanate and is optionally added to the "B"component.

In addition to the previously described ingredients, other ingredients such as, dyes, fillers, pigments and the like can be included in the preparation of the foams. Dispersing agents and cell stabilizers can be incorporated into the present blends. Conventional fillers for use herein include, for example, aluminum silicate, calcium silicate, magnesium silicate, calcium carbonate, barium sulfate, calcium sulfate, glass fibers, carbon black and silica. The filler, if used, is normally present in an amount by weight ranging from about 5 parts to 100 parts per 100 parts of polyol. A pigment which can be used herein can be any conventional pigment such as titanium dioxide, zinc oxide, iron oxide, antimony oxide, chrome green, chrome yellow, iron blue siennas, molybdate oranges and organic pigments such as para reds, benzidine yellow, toluidine red, toners and phthalocyanines.

The polyurethane or polyisocyanurate foams produced can vary in density from about 8.0 g/l (0.5 pounds per cubic foot) to about 961 g/l (60 pounds per cubic foot) preferably from about 16.0 to 320.4 g/l (1.0 to 20.0 pounds per cubic foot), and most preferably from about 24.0 to 96.1 g/l (1.5 to 6.0 pounds per cubic foot). The density obtained is a function of how much of the blowing agent or blowing agent mixture disclosed in this invention plus the amount of auxiliary blowing agent, such as water or other co-blowing agents is present in the A and / or B components, or alternatively added at the time the foam is prepared. These foams can be rigid, flexible, or semi-rigid foams, and can have a closed cell structure, an open cell structure or a mixture of open and closed cells. These foams are used in a variety of well known applications, including but not limited to thermal insulation, cushioning, flotation, packaging, adhesives, void filling, crafts and decorative, and shock absorption.

The following non-limiting examples serve to illustrate the invention.

### EXAMPLE 1

A polyol (B Component) formulation is made up of 100 parts by weight of a polyol blend, 1.5 parts by weight of LK-443 which is non-silicone non-ionic surfactant commercially available from Air Products Corporation, 3 parts by weight water, 8 parts by weight triethyl phosphate flame retardant, 0.7 parts by weight N,N-dimethylcyclohexylamine (sold as Polycat 8 by Air Products) catalyst and 8 parts by weight trans-HFO-1234ze blowing agent. The total B component composition, when freshly prepared and combined with 217.3 parts by weight of Lupranate M20S polymeric isocyanate yields a good quality foam with a fine and regular cell structure. Foam reactivity is typical of a slow reacting pour in place foam. The total B-side composition (119.7 parts) is then aged at 49°C (120 °F) for 62 hours, and then combined with 217.3 parts of M20S Iso polyisocyanate to make a foam. The foam is normal in appearance without cell collapse. No discoloration is noted during aging. This test conforms that a good foam can be made with a non-silicone surfactant, even after aging.

### EXAMPLE 2

A polyol (B Component) formulation is made up of 100 parts by weight of a polyol blend, 1.5 parts by weight of LK-443 which is non-silicone non-ionic surfactant commercially available from Air Products Corporation, 1.5 parts by weight water, 8.0 parts by weight diisopropylethylamine catalyst and 8 parts by weight trans-HFO-1234ze blowing agent. The total B component composition, when freshly prepared and combined with 120.0 parts by weight of Lupranate M20S polymeric isocyanate yields a good quality foam with a fine and regular cell structure. Foam reactivity is typical for a pour in place foam. The total B-side composition (119.0 parts) is then aged at 49°C (120 °F) for 62 hours, and then combined with 120.0 parts of M20S Iso polyisocyanate to make a foam. The foam is normal in appearance without cell collapse. No discoloration is noted during aging.

These examples show that the use of non-silicone non-ionic surfactant produce polyol premixes that are stable over time as evidenced by lack of cell coalescence and lack of foam collapse. When a non-silicone surfactant is substituted for a silicone surfactant, instability is not observed and a good quality foam is produced using both fresh and aged polyol premixes ("B" components).

While the present invention has been particularly shown and described with reference to preferred embodiments, it will be readily appreciated by those of ordinary skill in the art that various changes and modifications may be made without departing from the scope of the invention. It is intended that the claims be interpreted to cover the disclosed embodiment, those alternatives which have been discussed above and all equivalents thereto.

## Claims

1. A polyol premix composition which comprises a combination of a blowing agent, a polyol, a surfactant component which comprises a non-silicone surfactant and is substantially absent of a silicone surfactant, and an amine catalyst, wherein the blowing agent comprises a hydrohaloolefin, the hydrohaloolefin comprising at least one fluoroalkene or chloroalkene containing from 3 to 4 carbon atoms and at least one carbon-carbon double bond.

2. The polyol premix composition of claim 1, wherein the blowing agent additionally comprises a hydrocarbon, fluorocarbon, chlorocarbon, fluorochlorocarbon, halogenated hydrocarbon, CO₂ generating material, or combinations thereof.

3. The polyol premix composition of claim 1 wherein the amine has the formula R₁R₂N-[A-NR₃]ₙR₄ wherein each of R₁, R₂, R₃, and R₄ is independently H, a C₁ to C₈ alkyl group, a C₁ to C₈ alkenyl group, a C₁ to C₈ alcohol group, or a C₁ to C₈ ether group, or R₁ and R₂ together form a C₅ to C₇ cyclic alkyl group, a C₅ to C₇ cyclic alkenyl group, a C₅ to C₇ heterocyclic alkyl group, or a C₅ to C₇ heterocyclic alkenyl group; A is a C₁ to C₅ alkyl group, a C₁ to C₅ alkenyl group, or an ether; n is 0, 1, 2, or 3.

4. The polyol premix composition of claim 1, wherein the amine comprises a tertiary amine.

5. The polyol premix composition of claim 4, wherein the amine comprises dicyclohexylmethylamine; ethyldiisopropylamine; dimethylcyclohexylamine; dimethylisopropylamine; methylisopropylbenzylamine; methylcyclopentylbenzylamine; isopropyl-sec-butyl-trifluoroethylamine; diethyl-(α-phenylethyl)amine, tri-n-propylamine, or combinations thereof.

6. The polyol premix composition of any preceding claim, wherein the hydrohaloolefin comprises at least one fluoroalkene or chloroalkene containing 3 carbon atoms and at least one carbon-carbon double bond.

7. The polyol premix composition of any preceding claim wherein the hydrohaloolefin comprises a trifluoropropene, a tetrafluoropropene, a pentafluoropropene, a chlorodifluoropropene, a chlorotrifluoropropene, a chlorotetrafluoropropene, or combinations thereof.

8. The polyol premix composition of claim 1, wherein the hydrohaloolefin comprises 1,3,3,3-tetrafluoropropene; 2,3,3,3-tetrafluoropropene; 1,1,3,3-tetrafluoropropene; 1,2,3,3,3-pentafluoropropene; 1,1,1-trifluoropropene; 1,1,1,3,3-pentafluoropropene; 1,1,2,3,3-pentafluoropropene, 1,1,1,2,3-pentafluoropropene, 1-chloro-3,3,3-trifluoropropene, 1,1,1,4,4,4-hexafluorobut-2-ene or structural isomers, geometric isomers or stereoisomers thereof, or combinations thereof.

9. The polyol premix composition of claim 8, wherein the hydrohaloolefin comprises at least one of 1,3,3,3-tetrafluoropropene (HFO-1234ze) and 1-chloro-3,3,3-trifluoropropene (HFCO-1233zd).

10. The polyol premix composition of claim 9, wherein the hydrohaloolefin comprises trans 1,3,3,3-tetrafluoropropene (trans HFO-1234ze).

11. The polyol premix composition of claim 9, wherein the hydrohaloolefin comprises 1-chloro-3,3,3-trifluoropropene (HFCO-1233zd).

12. The polyol premix composition of any preceding claim, wherein the hydrohaloolefin has a Global Warming Potential of less than or equal to 150.

13. The polyol premix composition of any preceding claim, wherein the blowing agent further comprises water, formic acid, organic acids that produce CO₂ when they react with an isocyanate; hydrocarbons; ethers, esters, aldehydes, ketones, halogenated ethers; pentafluorobutane; pentafluoropropane; hexafluoropropane; heptafluoropropane; trans- 1,2 dichloroethylene; methyl formate; 1-chloro-1,2,2,2-tetrafluoroethane; 1,1-dichloro-1-fluoroethane; 1,1,1,2-tetrafluoroethane; 1,1,2,2-tetrafluoroethane; 1-chloro 1,1-difluoroethane; 1,1,1,3,3-pentafluorobutane; 1,1,1,2,3,3,3-heptafluoropropane; trichlorofluoromethane; dichlorodifluoromethane; 1,1,1,3,3,3-hexafluoropropane; 1,1,1,2,3,3-hexafluoropropane; difluoromethane; difluoroethane; 1,1,1,3,3- pentafluoropropane; 1,1-difluoroethane; isobutane; normal pentane; isopentane; cyclopentane, or combinations thereof.

14. The polyol premix composition of any preceding claim, wherein the non-silicone surfactant comprises a non-ionic non-silicone surfactant.

15. The polyol premix composition of claim 14, wherein the non-silicone surfactant comprises a salt of a sulfonic acid, an alkali metal salt of a fatty acid, an ammonium salt of a fatty acid such as oleic acid, stearic acid, dodecylbenzenedidulfonic acid, dinaphthylmethanedisulfonic acid and ricinoleic acid; an oxyethylated alkylphenol, an oxyethylated fatty alcohol, a paraffin oil, a castor oil ester, a ricinoleic acid ester, Turkey red oil, groundnut oil, a paraffin, a fatty alcohol, or combinations thereof.

16. The polyol premix composition of any preceding claim further comprising a catalyst comprising an organometallic compound containing bismuth, lead, tin, titanium, antimony, uranium, cadmium, cobalt, thorium, aluminum, mercury, zinc, nickel, cerium, molybdenum, vanadium, copper, manganese, zirconium, potassium, sodium, or combinations thereof.

17. The polyol premix composition of any preceding claim, wherein the surfactant component comprises 0% silicone surfactant.

18. A method of forming a polyol premix composition as defined in any of claims 1 to 17, which comprises combining a blowing agent, a polyol, a surfactant component which comprises a non-silicone surfactant and is substantially absent of a silicone surfactant, and an amine catalyst, wherein the blowing agent comprises a hydrohaloolefin, the hydrohaloolefin comprising at least one fluoroalkene or chloroalkene containing from 3 to 4 carbon atoms and at least one carbon-carbon double bond.

19. A foamable composition comprising a mixture of an organic polyisocyanate and a polyol premix composition as defined in any of claims 1 to 17.

20. A method of preparing a polyurethane or polyisocyanurate foam comprising reacting an organic polyisocyanate with a polyol premix composition as defined in any of claims 1 to 17.

21. A polyurethane or polyisocyanurate foam obtainable by a method as defined in claim 20.

## Patentansprüche

1. Polyol-Premixzusammensetzung, die eine Kombination eines Treibmittels, eines Polyols, einer Tensidkomponente, die ein Nichtsilikontensid umfasst und weitgehend frei von Silikontensid ist, und eines Amin-Katalysators umfasst, wobei das Treibmittel ein Hydrohalogenolefin umfasst, wobei das Hydrohalogenolefin mindestens ein Fluoralken oder Chloralken mit 3 bis 4 Kohlenstoffatomen und mindestens einer Kohlenstoff-Kohlenstoff-Doppelbindung umfasst.

2. Polyol-Premixzusammensetzung nach Anspruch 1, wobei das Treibmittel zusätzlich einen Kohlenwasserstoff, einen Fluorkohlenwasserstoff, einen Chlorkohlenwasserstoff, einen Fluorchlorkohlenwasserstoff, einen halogenierten Kohlenwasserstoff, eine CO₂ erzeugende Substanz oder Kombinationen davon umfasst.

3. Polyol-Premixzusammensetzung nach Anspruch 1, wobei das Amin die Formel R₁R₂N-[A-NR³]ₙR₄ aufweist, wobei R₁, R₂, R₃ und R₄ jeweils unabhängig voneinander für H, eine C₁- bis C₈-Alkylgruppe, eine C₁- bis C₈-Alkenylgruppe, eine C₁- bis C₈-Alkoholgruppe oder eine C₁- bis C₈-Ethergruppe stehen oder R₁ und R₂ zusammen eine cyclische C₅-bis C₇-Alkylgruppe, eine cyclische C₅- bis C₇-Alkenylgruppe, eine heterocyclische C₅- bis C₇-Alkylgruppe oder eine heterocyclische C₅- bis C₇-Alkenylgruppe bilden; A für eine C₁- bis C₅-Alkylgruppe, eine C₁- bis C₅-Alkenylgruppe oder ein Ether steht; n für 0, 1, 2 oder 3 steht.

4. Polyol-Premixzusammensetzung nach Anspruch 1, wobei das Amin ein tertiäres Amin umfasst.

5. Polyol-Premixzusammensetzung nach Anspruch 1, wobei das Amin Dicyclohexylmethylamin; Ethyldiisopropylamin; Dimethylcyclohexylamin; Dimethylisopropylamin; Methylisopropylbenzylamin; Methyl-cyclopentylbenzylamin; Isopropyl-sec.-butyltri-fluorethylamin; Diethyl(α-phenylethyl)amin, Tri-n-propylamin oder Kombinationen davon umfasst.

6. Polyol-Premixzusammensetzung nach einem der vorhergehenden Ansprüche, wobei das Hydrohalogenolefin mindestens ein Fluoralken oder Chloralken mit 3 Kohlenstoffatomen und mindestens einer Kohlenstoff-Kohlenstoff-Doppelbindung umfasst.

7. Polyol-Premixzusammensetzung nach einem der vorhergehenden Ansprüche, wobei das Hydrohalogenolefin ein Trifluorpropen, ein Tetrafluorpropen, ein Pentafluorpropen, ein Chlordifluorpropen, ein Chlortrifluorpropen, ein Chlortetrafluorpropen oder Kombinationen davon umfasst.

8. Polyol-Premixzusammensetzung nach Anspruch 1, wobei das Hydrohalogenolefin 1,3,3,3-Tetrafluorpropen; 2,3,3,3-Tetrafluorpropen; 1,1,3,3-Tetrafluorpropen; 1,2,3,3,3-Pentafluorpropen; 1,1,1-Trifluorpropen; 1,1,1,3,3-Pentafluorpropen; 1,1,2,3,3-Pentafluorpropen, 1,1,1,2,3-Pentafluorpropen, 1-Chlor-3,3,3-trifluorpropen, 1,1,1,4,4,4-Hexafluorbut-2-en oder Strukturisomere, geometrische Isomere oder Stereoisomere davon oder Kombinationen davon umfasst.

9. Polyol-Premixzusammensetzung nach Anspruch 8, wobei das Hydrohalogenolefin 1,3,3,3-Tetrafluorpropen (HFO-1234ze) und/oder 1-Chlor-3,3,3-trifluorpropen (HFCO-1233zd) umfasst.

10. Polyol-Premixzusammensetzung nach Anspruch 9, wobei das Hydrohalogenolefin trans-1,3,3,3-Tetrafluorpropen (trans-HFO-1234ze) umfasst.

11. Polyol-Premixzusammensetzung nach Anspruch 9, wobei das Hydrohalogenolefin 1-Chlor-3,3,3-tri-fluorpropen (HFCO-1233zd) umfasst.

12. Polyol-Premixzusammensetzung nach einem der vorhergehenden Ansprüche, wobei das Hydrohalogenolefin ein Treibhauspotential kleiner gleich 150 aufweist.

13. Polyol-Premixzusammensetzung nach einem der vorhergehenden Ansprüche, wobei das Treibmittel ferner Wasser, Ameisensäure, organische Säuren, die bei Reaktion mit einem Isocyanat CO₂ produzieren; Kohlenwasserstoffe; Ether, Ester, Aldehyde, Ketone, halogenierte Ether; Pentafluorbutan; Pentafluorpropan; Hexafluorpropan; Heptafluorpropan; trans-1,2-Dichlorethylen; Ameisensäuremethylester; 1-Chlor-1,2,2,2-tetra-fluorethan; 1,1-Dichlor-1-fluorethan; 1,1,1,2-Tetrafluoroethan; 1,1,2,2-Tetrafluorethan; 1-Chlor-1,1-difluorethan; 1,1,1,3,3-Pentafluorbutan; 1,1,1,2,3,3,3-Heptafluorpropan; Trichlorfluormethan; Dichlordifluormethan; 1,1,1,3,3,3-Hexafluorpropan; 1,1,1,2,3,3-Hexafluorpropan; Difluormethan; Difluorethan; 1,1,1,3,3-Pentafluorpropan; 1,1-Difluorethan; Isobutan; n-Pentan; Isopentan; Cyclopentan oder Kombinationen davon umfasst.

14. Polyol-Premixzusammensetzung nach einem der vorhergehenden Ansprüche, wobei das Nichtsilikontensid ein nichtionisches Nichtsilikontensid umfasst.

15. Polyol-Premixzusammensetzung nach Anspruch 14, wobei das Nichtsilikontensid ein Salz einer Sulfonsäure, ein Alkalimetallsalz einer Fettsäure, ein Ammoniumsalz einer Fettsäure wie Ölsäure, Stearinsäure, Dodecylbenzoldisulfonsäure, Dinaphthylmethandisulfonsäure und Ricinoleinsäure, ein oxyethyliertes Alkylphenol, einen oxyethylierten Fettalkohol, ein Paraffinöl, einen Ricinusölester, einen Ricinoleinsäureester, Türkischrotöl, Erdnussöl, ein Paraffin, einen Fettalkohol oder Kombinationen davon umfasst.

16. Polyol-Premixzusammensetzung nach einem der vorhergehenden Ansprüche, die ferner einen Katalysator umfasst, der eine Bismut, Blei, Zinn, Titan, Antimon, Uran, Cadmium, Cobalt, Thorium, Aluminium, Quecksilber, Zink, Nickel, Cer, Molybdän, Vanadium, Kupfer, Mangan, Zirconium, Kalium, Natrium oder Kombinationen davon enthaltende metallorganische Verbindung umfasst.

17. Polyol-Premixzusammensetzung nach einem der vorhergehenden Ansprüche, wobei die Tensidkomponente 0% Silikontensid umfasst.

18. Verfahren zur Bildung einer Polyol-Premixzusammensetzung gemäß einem der Ansprüche 1 bis 17, bei dem man ein Treibmittel, ein Polyol, eine Tensidkomponente, die ein Nichtsilikontensid umfasst und weitgehend frei von Silikontensid ist, und einen Amin-Katalysator zusammengibt, wobei das Treibmittel ein Hydrohalogenolefin umfasst, wobei das Hydrohalogenolefin mindestens ein Fluoralken oder Chloralken mit 3 bis 4 Kohlenstoffatomen und mindestens einer Kohlenstoff-Kohlenstoff-Doppelbindung umfasst.

19. Verschäumbare Zusammensetzung, umfassend eine Mischung eines organischen Polyisocyanats und einer Polyol-Premixzusammensetzung gemäß einem der Ansprüche 1 bis 17.

20. Verfahren zur Herstellung eines Polyurethan- oder Polyisocyanurat-Schaumstoffs, bei dem man ein organisches Polyisocyanat mit einer Polyol-Premixzusammensetzung gemäß einem der Ansprüche 1 bis 17 umsetzt.

21. Polyurethan- oder Polyisocyanurat-Schaumstoff, der nach einem Verfahren gemäß Anspruch 20 erhältlich ist.

## Revendications

1. Composition de mélange préalable contenant un polyol qui comprend une association d'un agent gonflant, d'un polyol, d'un composant tensioactif qui comprend un tensioactif non-silicone et qui est pratiquement exempt d'un tensioactif silicone et d'un catalyseur amine, dans laquelle l'agent gonflant comprend une oléfine hydrohalogénée, l'oléfine hydrohalogénée comprenant au moins un fluoroalcène ou chloroalcène contenant de 3 à 4 atomes de carbone et au moins une double liaison carbone-carbone.

2. Composition de mélange préalable contenant un polyol selon la revendication 1, dans laquelle l'agent gonflant comprend de plus un hydrocarbure, un hydrocarbure fluoré, un hydrocarbure chloré, un hydrocarbure fluoré et chloré, un hydrocarbure halogéné, une substance produisant du CO₂ ou des associations de ceux-ci.

3. Composition de mélange préalable contenant un polyol selon la revendication 1 dans laquelle l'amine répond à la formule R₁R₂N-[A-NR₃]ₙR₄ dans laquelle chacun de R₁, R₂, R₃ et R₄ est indépendamment H, un groupe alkyle en C₁ à C₈, un groupe alcényle en C₁ à C₈, un groupe alcoolique en C₁ à C₈ ou un groupe éther en C₁ à C₈ ou R₁ et R₂ forment ensemble un groupe alkyle cyclique en C₅ à C₇, un groupe alcényle cyclique en C₅ à C₇, un groupe alkyle hétérocyclique en C₅ à C₇ ou un groupe alcényle hétérocyclique en C₅ à C₇ ; A est un groupe alkyle en C₁ à C₅, un groupe alcényle en C₁ à C₅ ou un éther ; et n vaut 0, 1, 2 ou 3.

4. Composition de mélange préalable contenant un polyol selon la revendication 1, dans laquelle l'amine comprend une amine tertiaire.

5. Composition de mélange préalable contenant un polyol selon la revendication 4, dans laquelle l'amine comprend de la dicylohexylméthylamine ; de l'éthyldiisopropylamine ; de la diméthylcyclohexylamine ; de la diméthylisopropylamine ; de la méthylisopropylbenzylamine ; de la méthylcyclopentylbenzylamine ; de l'isopropyl-sec-butyltrifluoroéthylamine ; de la diéthyl-(α-phényléthyl)amine, de la tri-n-propylamine ou des associations de celles-ci.

6. Composition de mélange préalable contenant un polyol selon une quelconque revendication précédente, dans laquelle l'oléfine hydrohalogénée comprend au moins un fluoroalcène ou chloroalcène contenant 3 atomes de carbone et au moins une double liaison carbone-carbone.

7. Composition de mélange préalable contenant un polyol selon une quelconque revendication précédente dans laquelle l'oléfine hydrohalogénée comprend un trifluoropropène, un tétrafluoropropène, un pentafluoropropène, un chlorodifluoropropène, un chlorotrifluoropropène, un chlorotétrafluoropropène ou des associations de ceux-ci.

8. Composition de mélange préalable contenant un polyol selon la revendication 1, dans laquelle l'oléfine hydrohalogénée comprend du 1,3,3,3-tétrafluoropropène ; du 2,3,3,3-tétrafluoropropène ; du 1,1,3,3-tétrafluoropropène ; du 1,2,3,3,3-pentafluoropropène ; du 1,1,1-trifluoropropène ; du 1,1,1,3,3-pentafluoropropène ; du 1,1,2,3,3-pentafluoropropène ; du 1,1,1,2,3-pentafluoropropène, du 1-chloro-3,3,3-trifluoropropène, du 1,1,1,4,4,4-hexafluorobut-2-ène ou des isomères structuraux, isomères géométriques ou stéréoisomères de ceux-ci ou des associations de ceux-ci.

9. Composition de mélange préalable contenant un polyol selon la revendication 8, dans laquelle l'oléfine hydrohalogénée comprend au moins l'un du 1,3,3,3-tétrafluoropropène (HFO-1234ze) et du 1-chloro-3,3,3-trifluoropropène (HFCO-1233zd).

10. Composition de mélange préalable contenant un polyol selon la revendication 9, dans laquelle l'oléfine hydrohalogénée comprend du 1,3,3,3-tétrafluoropropène trans (HFO-1234ze trans).

11. Composition de mélange préalable contenant un polyol selon la revendication 9, dans laquelle l'oléfine hydrohalogénée comprend du 1-chloro-3,3,3-trifluoropropène (HFCO-1233zd).

12. Composition de mélange préalable contenant un polyol selon une quelconque revendication précédente, dans laquelle l'oléfine hydrohalogénée a un potentiel de réchauffement global inférieur ou égal à 150.

13. Composition de mélange préalable contenant un polyol selon une quelconque revendication précédente, dans laquelle l'agent gonflant comprend en outre de l'eau, de l'acide formique, des acides organiques qui produisent du CO₂ lorsqu'ils réagissent avec un isocyanate ; des hydrocarbures ; des éthers, des esters, des aldéhydes, des cétones, des éthers halogénés ; du pentafluorobutane ; du pentafluoropropane ; de l'hexafluoropropane ; de l'heptafluoropropane ; du trans-1,2-dichloroéthylène ; du formiate de méthyle ; du 1-chloro-1,2,2,2-tétrafluoroéthane ; du 1,1-dichloro-1-fluoroéthane ; du 1,1,1,2-tétrafluoroéthane ; du 1,1,2,2-tétrafluoroéthane ; du 1-chloro-1,1-difluoroéthane ; du 1,1,1,3,3-pentafluorobutane ; du 1,1,1,2,3,3,3-heptafluoropropane ; du trichlorofluorométhane ; du dichlorodifluorométhane ; du 1,1,1,3,3,3-hexafluoropropane ; du 1,1,1,2,3,3-hexafluoropropane ; du difluorométhane ; du difluoroéthane ; du 1,1,1,3,3-pentafluoropropane ; du 1,1-difluoroéthane ; de l'isobutane ; du pentane normal ; de l'isopentane ; du cyclopentane ou des associations de ceux-ci.

14. Composition de mélange préalable contenant un polyol selon une quelconque revendication précédente, dans laquelle le tensioactif non-silicone comprend un tensioactif non-silicone non ionique.

15. Composition de mélange préalable contenant un polyol selon la revendication 14, dans laquelle le tensioactif non-silicone comprend un sel d'un acide sulfonique, un sel de métal alcalin d'un acide gras, un sel d'ammonium d'un acide gras tel que l'acide oléique, l'acide stéarique, l'acide dodécylbenzènedisulfonique, l'acide dinaphtylméthanedisulfonique et l'acide ricinoléique ; un alkylphénol oxyéthylé, un alcool gras oxyéthylé, une huile de paraffine, un ester d'huile de ricin, un ester de l'acide ricinoléique, de l'huile pour rouge turc, de l'huile d'arachide, une paraffine, un alcool gras ou des associations de ceux-ci.

16. Composition de mélange préalable contenant un polyol selon une quelconque revendication précédente comprenant en outre un catalyseur comprenant un composé organométallique contenant du bismuth, du plomb, de l'étain, du titane, de l'antimoine, de l'uranium, du cadmium, du cobalt, du thorium, de l'aluminium, du mercure, du zinc, du nickel, du cérium, du molybdène, du vanadium, du cuivre, du manganèse, du zirconium, du potassium, du sodium ou des associations de ceux-ci.

17. Composition de mélange préalable contenant un polyol selon une quelconque revendication précédente, dans laquelle le composant tensioactif comprend 0 % de tensioactif silicone.

18. Procédé de formation d'une composition de mélange préalable contenant un polyol telle que définie dans l'une quelconque des revendications 1 à 17, qui comprend la combinaison d'un agent gonflant, d'un polyol, d'un composant tensioactif qui comprend un tensioactif non-silicone et qui est pratiquement exempt d'un tensioactif silicone et d'un catalyseur amine, dans lequel l'agent gonflant comprend une oléfine hydrohalogénée, l'oléfine hydrohalogénée comprenant au moins un fluoroalcène ou chloroalcène contenant de 3 à 4 atomes de carbone et au moins une double liaison carbone-carbone.

19. Composition pouvant former de la mousse comprenant un mélange d'un polyisocyanate organique et d'une composition de mélange préalable contenant un polyol telle que définie dans l'une quelconque des revendications 1 à 17.

20. Procédé de préparation d'une mousse de polyuréthane ou de polyisocyanurate comprenant la réaction d'un polyisocyanate organique avec une composition de mélange préalable contenant un polyol telle que définie dans l'une quelconque des revendications 1 à 17.

21. Mousse de polyuréthane ou de polyisocyanurate pouvant être obtenue par un procédé tel que défini dans la revendication 20.
